# EUROPÄISCHE PATENTSCHRIFT

(11) **EP 1 289 781 B1**
(45) Veröffentlichungstag und Bekanntmachung des Hinweises auf die Patenterteilung: **13.10.2004**
(21) Anmeldenummer: 01938244.9
(22) Anmeldetag: 31.05.2001
(51) Int. Cl.: B60D 1/173, B61G 5/00

(54) **VORRICHTUNG ZUR LÖSBAREN VERBINDUNG VON ZWEI IN REIHE ANGEORDNETEN FAHRZEUGELEMENTEN EINES FAHRZEUGS UND DEREN VERWENDUNG**
DEVICE FOR DETACHABLY INTERLINKING TWO VEHICLE ELEMENTS OF A VEHICLE THAT ARE ARRANGED IN TANDEM, AND THE USE THEREOF
DISPOSITIF POUR RELIER DE MANIERE AMOVIBLE DEUX ELEMENTS D UN VEHICULE DISPOSES EN SERIE, ET UTILISATION DE CE DISPOSITIF

(30) Priorität: 07.06.2000 DE 10028234
(43) Veröffentlichungstag der Anmeldung: 12.03.2003
(73) Patentinhaber: Guido Kübler GmbH, 86399 Bobingen (DE)
(72) Erfinder: GAIN, Norbert, Ralf, 79341 Kenzingen (DE); KÜBLER, Guido, 86399 Bobingen (DE)
(74) Vertreter: Grape, Knut, Dipl.-Ing.
(86) Internationale Anmeldenummer: PCT/EP2001/006201
(87) Internationale Veröffentlichungsnummer: WO 2001/094134

(56) Entgegenhaltungen:
- DE-C- 19 731 866
- US-A- 4 106 794
- US-A- 4 453 487
- US-A- 4 500 056
- US-A- 5 746 391

## Beschreibung

Die Erfindung betrifft eine Vorrichtung zur lösbaren Verbindung von zwei in Reihe angeordneten Fahrzeugelementen eines Fahrzeugs und deren Verwendung.

Derartige Vorrichtungen sind allgemein bekannt. So beschreibt beispielsweise die DE 197 31 866 C1 eine Kuppeleinrichtung zur lösbaren Verbindung von zwei in Reihe angeordneten Wagen eines Schienenfahrzeugs. Diese Kuppeleinrichtung umfasst zwei Kuppelträger an einander zugewandten Wagenkastenenden der zwei Wagen und zwischen den zwei Kuppelträgern angeordnete Kuppelstangen zur Übertragung von Kräften zwischen den Wagen. Die Kuppelstangen sind starr und in deren Länge unveränderbar ausgebildet. Ein Ende der Kuppelstangen ist an einem Drehgelenk drehbar angebracht. Das andere Ende ist von einem Hydraulikelement aufgenommen, das in der Ebene der Kuppelträger angeordnet und sich entweder senkrecht oder waagerecht verschieben lässt. Auf diese Weise soll eine Kraftübertragung zwischen den Kuppelträgern an mehreren entfernt voneinander angeordneten Stellen ermöglicht werden. Nachteilig bei dieser Kuppeleinrichtung hat sich allerdings deren konstruktive Ausgestaltung insgesamt erwiesen. Einerseits ist die Verbindung zwischen den einander zugewandten Kuppelträgern verhältnismäßig starr, so dass vornehmlich nur Zug- und Druckkräfte von einem Wagen auf den anderen übertragen werden können. Zwar sollen ebenso Kippund Verdrehbewegungen zwischen den Kuppelträgern möglich sein, jedoch lediglich in ganz begrenztem Maße. Andererseits sind die Verschiebewege aufgrund der in der jeweiligen Ebene der Kuppelträger angeordneten Hydraulikelemente verhältnismäßig klein. Insoweit sind größere Relativbewegungen der Wagen zueinander, sei es in waagerechter Richtung, sei es in senkrechter Richtung, ausgeschlossen. Durch eine solche insgesamt sehr starre und wenig flexible Verbindung lassen sich daher Relativbewegungen der Wagen zueinander nicht individuell aufnehmen. Demgemäß kann beispielsweise ein Verlust eines Radreifens oder sogar eines ganzen Drehgestells nicht aufgefangen werden. Auch ein Zusammenstauchen der einzelnen Wagen entsprechend einem sogenannten Ziehharmonikaeffekt kann nicht verhindert werden.

Des Weiteren beschreibt die US-PS 4,106,794 eine Vorrichtung zur lösbaren Verbindung von zwei in Reihe angeordneten Fahrzeugelementen eines Fahrzeugs in Form eines Kraftfahrzeuges und eines von diesem gezogenen Anhängers. Die Vorrichtung umfasst zwei Abstützelemente an einander zugewandten Enden der zwei Fahrzeugelemente und zwischen den zwei Abstützelementen angeordnete Verbindungseinrichtungen zur Übertragung von Kräften zwischen den Fahrzeugelementen. Bei dieser Vorrichtung ist eine durch aktive Steuerung oder Regelung vorgesehene Längenverstellbarkeit des/der Verbindungselemente/s nicht vorgesehen. So sind die Verbindungseinrichtungen zwar in Form von stabförmigen Verbindungselementen längenverstellbar, im Betrieb allerdings steif ausgebildet. Die stabförmigen Verbindungselemente sind zu diesem Zweck zweigeteilt und mittels Bolzen und entsprechend ausgebildeteten Ausnehmungen in der Länge festgelegt. Daher ist jedes Mal eine manuelle Betätigung erforderlich, um die Länge der Verbindungseinrichtungen zu verstellen.

Weiterhin ist aus der US-PS 4,500,056 eine Vorrichtung zur lösbaren Verbindung von zwei in Reihe angeordneten Fahrzeugelementen eines Fahrzeuges bekannt. Das Fahrzeug kann dabei von beliebiger Art sein, d.h. beispielsweise als Landfahrzeug, bestehend aus einer Zugmaschine und einem Anhänger, als Hubschrauber in Form eines Lastenträgers oder als Flugzeug zum Abschleppen eines Gleitflugzeuges ausgebildet sein. Auch bei dieser Vorrichtung sind zu diesem Zweck jeweils zwei Abstützelemente vorgesehen, die über Verbindungseinrichtungen zur Übertragung von Kräften zwischen den Fahrzeugelementen miteinander verbunden sind. Die Verbindungseinrichtungen in Form von stabförmigen Verbindungselementen sind zwar längenverstellbar, im Betrieb allerdings steif ausgebildet. Eine Längenverstellung der Verbindungseinrichtungen ist somit ausschließlich durch manuelle Betätigung möglich.

Die US-PS 5,746,391 schließlich zeigt eine Vorrichtung zur Befestigung einer Gasturbine an einem Flugzeugkorpus, wobei die vorgesehene Vorrichtung eine relativ hohe Steifigkeit und ein verhältnismäßig niedriges Gewicht aufweisen sowie in der Herstellung kostengünstig sein soll. Die Vorrichtung umfasst dabei eine Vielzahl von Stabelementen, die zwischen mehreren Kraftübertragungspunkten angeordnet sind. Die Enden der Stabelemente, die dabei zwar hydraulisch, elektrisch oder pneumatisch längenverstellbar sein sollen, um den Schiebewinkel der Gasturbine relativ zu dem Flugzeugkorpus zu verstellen bzw. zu steuern, sind allerdings nicht unmittelbar an den zwei Abstützelementen abgestützt, sondern lediglich mittelbar. So basiert diese Vorrichtung ausnehmlich auf einer Art Hilfsebene oder sogenannten Zwischenebene, die zwischen den zwei Abstützelementen zwischengeordnet ist. Die Stabelemente jedenfalls stehen mit den beiden Abstützelementen selbst nicht in direktem Wirkeingriff.

Der Erfindung liegt daher die Aufgabe zugrunde, eine Vorrichtung zur lösbaren Verbindung von zwei in Reihe angeordneten Fahrzeugelementen eines Fahrzeugs zur Verfügung zu stellen, mit welcher sich die obigen Nachteile verhindern lassen, welche mithin konstruktiv besonders einfach, zugleich kompakt und stabil ausgebildet ist und trotzdem Relativbewegungen zwischen den einzelnen benachbarten Fahrzeugelementen eines Fahrzeugs zueinander auf definierte Weise ermöglicht, sowie eine vorteilhafte Verwendung dieser Vorrichtung bereitzustellen.

Diese Aufgabe wird in vorrichtungstechnischer Hinsicht durch die Merkmale des Anspruchs 1 gelöst.

Demnach ist durch die Ausgestaltung der erfindungsgemäßen Vorrichtung zur lösbaren Verbindung von zwei in Reihe angeordneten Fahrzeugelementen eines Fahrzeugs mit zwei Abstützelementen an einander zugewandten Enden der zwei Fahrzeugelemente und zwischen den zwei Abstützelementen angeordneten Verbindungseinrichtungen zur Übertragung von Kräften zwischen den Fahrzeugelementen, wobei wenigstens drei Verbindungseinrichtungen vorgesehen sind, die sämtlich oder mit Ausnahme einer einzigen längenverstellbar sind und deren Enden jeweils über Kugelgelenke an den zwei Abstützelementen über mindestens drei von einander unterschiedliche, in einer gemeinsamen Ebene liegende Kraftübertragungspunkte abgestützt sind, derart, dass zwischen den zwei Abstützelementen der zwei Fahrzeugelemente Zug-, Druck- und Torsionskräfte übertragbar sind, eine besonders einfache, zudem kompakte Bauweise der Vorrichtung insgesamt erreicht. Darüber hinaus ist diese erfindungsgemäße Vorrichtung in ihrer Bauweise ausgesprochen stabil. Schließlich hat die erfindungsgemäße Vorrichtung den wesentlichen Vorteil, die heutigen sicherheitstechnischen Standards in befriedigender Weise zu erfüllen und ausgleichende Relativbewegungen zwischen einzelnen Fahrzeugelementen des Fahrzeugs individuell vornehmen zu können. Die Kopplung von zwei einander benachbarten Fahrzeugelementen eines Fahrzeugs erfolgt starr und wird verriegelt. Zugleich aber werden auszugleichende Bewegungen durch die Verbindungseinrichtungen der erfindungsgemäßen Vorrichtung aufgenommen und können bei Bedarf beliebig und individuell gedämpft, aktiv gesteuert, vorgespannt oder in sonstiger Weise korrigiert werden. Dadurch wird ein vordefiniertes Fahrverhalten des Fahrzeugs, zum Beispiel eines Gliederzuges insgesamt, ermöglicht. Schließlich ist auch kostengünstige Herstellungsweise der Vorrichtung nach der Erfindung ermöglicht.

Weitere vorteilhafte Einzelheiten der erfindungsgemäßen Vorrichtung sind in den Ansprüchen 2 bis 32 beschrieben.

Von besonderer Bedeutung für eine einfache, gleichzeitig zuverlässige Bauweise wie auch einen flexiblen Ausgleich an plötzlich auftretende Relativbewegungen der Fahrzeugelemente eines Fahrzeugs zueinander und damit einer Reaktion in Echtzeit sind die Maßnahmen des Anspruchs 2, wonach die Verbindungseinrichtung ein stabförmiges Verbindungselement umfasst, das teleskopartig längenverstellbar ist, wobei dessen Enden über die Kugelgelenke unmittelbar an den zwei Abstützelementen abgestützt sind.

Alternativ dazu kann die Verbindungseinrichtung nach den Merkmalen des Anspruchs 3 auch ein stabförmiges Verbindungselement konstanter Länge umfassen, wobei mindestens ein Ende, vorzugsweise beide Enden, des Verbindungselementes über das Kugelgelenk unter Zwischenanordnung eines Längeneinstellungselementes an dem zugeordneten Abstützelement abgestützt ist.

Ohne die Funktionsfähigkeit zu beeinträchtigen, gleichzeitig aber die Bauweise weiter zu vereinfachen, ist es in diesem Zusammenhang darüber hinaus möglich, dass eine der Verbindungseinrichtungen entsprechend Anspruch 4 ein stabförmiges Verbindungselement konstanter Länge umfasst, wobei dessen Enden über die Kugelgelenke unmittelbar an den zwei Abstützelementen abgestützt sind.

Weiterhin liegt es im Rahmen der Erfindung entsprechend den Ansprüchen 5 und 6, die Verbindungseinrichtung in Längsrichtung im Wesentlichen senkrecht oder in einem Winkel zu den von den mindestens drei Kraftübertragungspunkten aufgespannten Ebenen anzuordnen. Dabei erstreckt sich diejenige Verbindungseinrichtung, die in einem Winkel zu den von den mindestens drei Kraftübertragungspunkten aufgespannten Ebenen angeordnet ist, diagonal.

Sofern es sich bei dem Fahrzeug, für welches die erfindungsgemäße Vorrichtung bestimmt ist, um ein Wasserfahrzeug handelt, sind in aller Regel drei Verbindungseinrichtungen zur Übertragung von Zug-, Druck- und Torsionskräften zwischen den zwei Abstützelementen der zwei Fahrzeugelemente entsprechend Anspruch 7 ausreichend.

Die erfindungsgemäße Vorrichtung gemäß Anspruch 8, dass nämlich fünf Verbindungseinrichtungen zur Übertragung von Zug-, Druck- und Torsionskräften zwischen den zwei Abstützelementen der zwei Fahrzeugelemente angeordnet sind, eignet sich in ganz vorteilhafter Weise für ein Landfahrzeug und dabei insbesondere für ein Schienenfahrzeug.

In diesem Zusammenhang liegt es im Rahmen der Erfindung, die fünf Verbindungseinrichtungen entsprechend den Merkmalen der Ansprüche 9 und 10 jeweils als ein längenverstellbares, stabförmiges Verbindungselement auszugestalten oder alternativ als zwei längenverstellbare, stabförmige Verbindungselemente, die diagonal zwischen den zwei Abstützelementen angeordnet sind, und drei stabförmige Verbindungselemente konstanter Länge mit jeweils einem Längeneinstellungselement auszubilden.

Handelt es sich demgegenüber bei einem Fahrzeug, welches mit der erfindungsgemäßen Vorrichtung bestückt werden soll, um ein Flugzeug oder einen Flugkörper, der für das Weltall bestimmt ist, so liegt es des weiteren im Rahmen der Erfindung, nach Anspruch 11 sechs Verbindungseinrichtungen zur Übertragung von Zug-, Druck- und Torsionskräften zwischen den zwei Abstützelementen der zwei Fahrzeugelemente vorzusehen. Einerseits wird auf diese Weise der konstruktive Aufwand und damit einhergehend auch das Gewicht der erfindungsgemäßen Vorrichtung gering gehalten. Andererseits ist ein individueller Ausgleich von Relativbewegungen zwischen den zwei Fahrzeugelementen auf befriedigende Weise sichergestellt.

Zur zusätzlichen Erzeugung einer Vorspannung zwischen den zwei Abstützelementen der zwei Fahrzeugelemente ist es nach Anspruch 12 erfindungsgemäß vorgesehen, eine weitere Verbindungseinrichtung zwischen den zwei Abstützelementen anzuordnen.

Von ganz besonderem Interesse für eine starre und festgelegte Verbindung, gleichzeitig aber einen schnellen und individuellen Ausgleich von Relativbewegungen der Fahrzeugelemente zueinander sind die Maßnahmen des Anspruchs 13, wonach zwölf Verbindungseinrichtungen zwischen den zwei Abstützelementen der zwei Fahrzeugelemente des Fahrzeugs wirken. Eine solche Ausgestaltung ist insbesondere für Fahrzeuge auf dem Lande, wie zum Beispiel Schienenfahrzeuge, von großer Bedeutung. So ist es auf diese Weise möglich, selbst einen Verlust eines Radreifens oder sogar eines ganzen Drehgestelles aufzufangen. Ein Eisenbahnunglück wie bei Eschede kann damit sicher vermieden werden. Selbst bei Wegbrechen eines Radreifens nämlich würde durch die stabile Kopplung aufgrund der erfindungsgemäßen Vorrichtung das noch intakte Fahrzeugelement die erforderliche Stützfunktion übernehmen können. Beispielsweise wäre es durchaus denkbar, in einem solchen Fall das defekte Fahrzeugelement durch das noch intakte Fahrzeugelement mittels der erfindungsgemäßen Vorrichtung geringfügig anzuheben. Auch ließe sich auf diese Weise ein Zusammenstauchen einzelner Fahrzeugelemente entsprechend dem sogenannten Ziehharmonikaeffekt, wie bei dem Eisenbahnunglück bei Brühl/Bonn sicher verhindern.

Vorteilhafterweise sind dabei an jedem Abschnittselement nach Anspruch 14 vier Kraftübertragungspunkte vorgesehen, die auf einem gedachten Kreis oder an den Ecken eines gedachten Quadrats bzw. Rechtecks oder sonstigen Polygons zur Anlenkung von jeweils drei Enden von drei der zwölf Verbindungseinrichtungen angeordnet sind.

Die bauliche Ausgestaltung entsprechend den Maßnahmen der Ansprüche 15 bis 17, wonach sich letztendlich die Kraftübertragungspunkte an den zwei Abschnittselementen im Wesentlichen in deren randseitigen Bereich befinden und die Verbindungseinrichtungen in senkrecht zu den Abstützelementen stehenden Ebenen verlaufen, ermöglicht grundsätzlich die Anordnung eines Personenübergangs zwischen zwei benachbarten Fahrzeugelementen, ohne den Personenübergang durch beispielsweise schräg verlaufende Verbindungseinrichtungen unnötig zu behindern.

Um einen solchen Personenübergang zu ermöglichen, ist zwischen den zwei Abstützelementen und den Verbindungseinrichtungen zwischen den zwei Abstützelementen nach Anspruch 18 ein begehbarer Steg oder dergleichen Übergang vorgesehen.

Durch die Maßnahmen der Ansprüche 19 und 20, nämlich die zwei Abstützelemente über einen dazwischen angeordneten längselastischen Faltenbalg zu verbinden, der die Verbindungseinrichtungen zudem wenigstens außen, insbesondere zusätzlich innen, umschließt, wird die erfindungsgemäße Vorrichtung 10 gegen Ablagerungen aus Staub, Schmutz etc. wie auch gegen Korrosion infolge Wassereintritts, beispielsweise Salzwassers, geschützt. Damit einhergehend kann die Lebensdauer der erfindungsgemäßen Vorrichtung wesentlich erhöht werden.

Weiterhin liegt es im Rahmen der Erfindung, die längenverstellbare Verbindungseinrichtung nach Anspruch 21 hydraulisch, pneumatisch, mechanisch oder elektrisch betätigen zu können. Die individuelle Steuerung bzw. unter Umständen auch vorgesehene Regelung der jeweiligen Verbindungseinrichtung lässt sich schnell, d.h. weitgehend in Echtzeit, und ohne zusätzlichen konstruktiven Aufwand sowie mit hoher Zuverlässigkeit vornehmen.

In diesem Zusammenhang umfasst die längenverstellbare Verbindungseinrichtung nach Anspruch 22 zweckmäßigerweise eine Hydraulikeinheit, Pneumatikeinheit, Lineareinheit, Spindeleinheit, einen Linearmotor oder dergleichen. Durch eine Hydraulikeinheit, wie einem Hydraulikzylinder beispielsweise, erfolgt die Ansteuerung der Verbindungseinrichtungen durch entsprechenden Druckaufbau in zwei einander gegenüberliegenden Kammern, deren Verstellung durch ein Wegmesssystem kontrollierbar ist. Es lässt sich eine definierte Position der jeweiligen Verbindungseinrichtung erhalten.

Durch die erfindungsgemäße Ausgestaltung nach den Ansprüchen 23 und 24, dass die zwei Abstützelemente mit den dazwischen angeordneten wenigstens drei Verbindungseinrichtungen an den einander zugewandten Enden der zwei Fahrzeugelemente integral angebracht sind, wobei wenigstens ein Abstützelement mit dem zugeordneten Ende des einen der zwei Fahrzeugelemente lösbar verbunden ist, ergibt sich eine einfache und stabile Bauweise insgesamt. Die erfindungsgemäße Vorrichtung kann an dem jeweiligen Fahrzeugelement integriert werden. Gleichzeitig ist allerdings sichergestellt, dass eine Abkopplung von zwei miteinander lösbar verbundenen Fahrzeugelementen jederzeit vorgenommen werden kann.

Alternativ dazu liegt es weiterhin im Rahmen der Erfindung, dass die zwei Abstützelemente nach Anspruch 25 mit den dazwischen angeordneten wenigstens drei Verbindungseinrichtungen als quasi bauliche Einheit mit den einander zugewandten Enden der zwei Fahrzeugelemente lösbar verbunden sind. Auf diese Weise ist es nicht unbedingt erforderlich, dass jedes Fahrzeugelement mit einer Vorrichtung nach der Erfindung ausgestattet sein muss, um ein Fahrzeug zusammenzustellen, das aus einer Vielzahl von Fahrzeugelementen besteht. So ist es beispielsweise denkbar, dass eine erfindungsgemäße Vorrichtung an einem Ort verfügbar ist, an welchem das Fahrzeug aus mehreren einzelnen Fahrzeugelementen zusammengesetzt werden soll, die erfindungsgemäße Vorrichtung nach Erreichen eines anderen Ortes, an welchem das Fahrzeug zum Beispiel wieder verkleinert werden soll, wieder abgekoppelt wird und für einen neuen Einsatz an diesem Ort bereitgehalten wird.

Entsprechend den Merkmalen der Ansprüche 26 bis 29 ist zu diesem Zweck erfindungsgemäß vorgesehen, dass die zwei Abstützelemente an den einander zugewandten Enden der zwei Fahrzeugelemente über Reibschluss- und/oder Formschluss-Verbindungen, die gegebenenfalls als Schwalbenschwanz- oder auch Feder-Nut-Verbindungen ausgebildet sind, positionsgenau montiert, befestigt und gesichert werden können.

Von besonderem Interesse für eine einfache, unter Umständen zentrale und genau bestimmbare Steuerung der erfindungsgemäßen Vorrichtung sind die konstruktiven Maßnahmen der Ansprüche 30 und 31, wonach die Verbindungseinrichtungen mit wenigstens einer Steuereinrichtung zu deren Steuerung bzw. Regelung kommunizieren, und zwar entweder jeweils individuell oder sämtlich gemeinsam aufeinander abgestimmt.

Um darüber hinaus bereits frühzeitig geographische Gegebenheiten etc., soweit erforderlich, bei der Steuerung bzw. Regelung mit berücksichtigen zu können, ist die wenigstens eine Steuereinrichtung nach Anspruch 32 mit einer Sende-/Empfangseinrichtung zur Steuerung mittels Funk und/oder GPS (global positioning system)- bzw. GSM (groupe speciale mobile)-Standard und/oder Infrarot versehen.

Schließlich liegt es noch im Rahmen der Erfindung entsprechend Anspruch 33, eine Vorrichtung gemäß der Erfindung zur lösbaren Verbindung von zwei in Reihe angeordneten Fahrzeugelementen von Gliederfahrzeugen auf dem Lande, zu Wasser, in der Luft und im Weltall zu verwenden. Insbesondere ist hierbei an den Einsatz in Hochgeschwindigkeitszügen, wie bereits erläutert, gedacht. Ebenso ist es jedoch möglich, die erfindungsgemäße Vorrichtung in der Binnenschifffahrt einzusetzen. Durch eine kontrollierte Lenkbewegung der Vorrichtung nach der Erfindung sind insoweit in einem Schubverband entweder mehr Fahrzeugelemente einsetzbar und/oder kleinere Lenkradien ermöglicht. Damit einhergehend ist eine größere Lastkapazität sichergestellt. Ebenso denkbar ist der Einsatz der erfindungsgemäßen Vorrichtung in der Hochseeschifffahrt. Durch ein aktives Steuersystem können zum Beispiel Tankschiffe in segmentgebundene Frachtschiffe zerlegt werden. Eine größere Ladekapazität ergibt sich aufgrund wegfallender Längenbeschränkung der einzelnen Fahrzeugelemente infolge einer besseren Lenkfähigkeit. Weitere Einsatzgebiete der erfindungsgemäßen Vorrichtung finden sich ebenso in der Luft- und Raumfahrt, bezüglich Straßenbahnen, Güterzügen wie auch im Straßenverkehr. Insgesamt können die sicherheitstechnischen Standards mit der erfindungsgemäßen Vorrichtung wesentlich verbessert werden, weshalb letztendlich die Sicherheit und damit einhergehend die körperliche Unversehrtheit oder Unglücke mit tödlichem Ausgang für Menschen weitestgehend vermieden werden können.

Weitere Merkmale, Vorteile und Einzelheiten der Erfindung ergeben sich aus der nachfolgenden Beschreibung einiger bevorzugten Ausführungsformen der Erfindung sowie anhand der Zeichnungen. Hierbei zeigen:
- Fig. 1A: eine schematische perspektivische Ansicht einer ersten Ausführungsform einer erfindungsgemäß ausgebildeten Vorrichtung zur lösbaren Verbindung von zwei in Reihe angeordneten Fahrzeugelementen eines Fahrzeugs,
- Fig. 1B: eine teilweise abgebrochene schematische perspektivische Ansicht der Ausführungsform der erfindungsgemäßen Vorrichtung zur lösbaren Verbindung von zwei in Reihe angeordneten Fahrzeugelementen eines Fahrzeugs nach der Fig. 1A,
- Fig. 1C bis 1E: verschiedene teilweise abgebrochene schematische perspektivische Ansichten der Ausführungsform der erfindungsgemäßen Vorrichtung nach den Fig. 1A und 1B in unterschiedlichen Stellungen der zwei in Reihe angeordneten Fahrzeugelemente des Fahrzeugs zueinander,
- Fig. 2: eine schematische perspektivische Ansicht einer anderen Ausführungsform einer erfindungsgemäß ausgebildeten Vorrichtung zur lösbaren Verbindung von zwei in Reihe angeordneten Fahrzeugelementen eines Fahrzeugs,
- Fig. 3: eine teilweise abgebrochene Draufsicht auf eine weitere Ausführungsform einer erfindungsgemäßen Vorrichtung zur lösbaren Verbindung von zwei in Reihe angeordneten Fahrzeugelementen eines Fahrzeugs entsprechend der Fig. 1A,
- Fig. 4A bis 4D: teilweise abgebrochene schematische Draufund Seitenansichten auf eine abgewandelte Ausführungsform einer erfindungsgemäßen Vorrichtung zur lösbaren Verbindung von zwei in Reihe angeordneten Fahrzeugelementen eines Fahrzeugs entsprechend der Fig. 3, wobei die Vorrichtung nach der Erfindung in den Fig. 4A und 4B im unmotierten Zustand und in den Fig. 4C und 4D im montierten Zustand gezeigt ist,
- Fig. 5: eine schematische Draufsicht auf ein Gliederfahrzeug zu Wasser mit einer Vielzahl von in Reihe angeordneten Fahrzeugelementen und dazwischen vorgesehenen erfindungsgemäßen Vorrichtungen nach den Fig. 1 bis 4D, und
- Fig. 6: eine schematische Seitenansicht eines Gliederfahrzeugs zu Wasser mit einer Vielzahl von in Reihe angeordneten Fahrzeugelementen und dazwischen vorgesehenen erfindungsgemäßen Vorrichtungen nach den Fig. 1 bis 4D.

Die erfindungsgemäße Vorrichtung 10 ist zur lösbaren Verbindung von zwei in Reihe angeordneten Fahrzeugelementen 12, 12' eines Fahrzeugs vorgesehen. Bei der nachfolgenden Beschreibung von verschiedenen Ausführungsbeispielen der erfindungsgemäßen Vorrichtung 10 sind einander entsprechende, gleiche Bauteile jeweils mit identischen Bezugsziffern versehen.

Die Vorrichtung 10 nach der Erfindung eignet sich insbesondere zur lösbaren Kopplung von zwei in Reihe angeordneten Fahrzeugelementen 12, 12' von Gliederfahrzeugen auf dem Lande, wie (Last-)Kraftfahrzeuge mit Anhängern, insbesondere Schienenfahrzeuge, wie Personen- und Güterzüge oder Straßenbahnen, zu Wasser, wie einem Schubverband aus mehreren Containerschiffen, in der Luft und im Weltall.

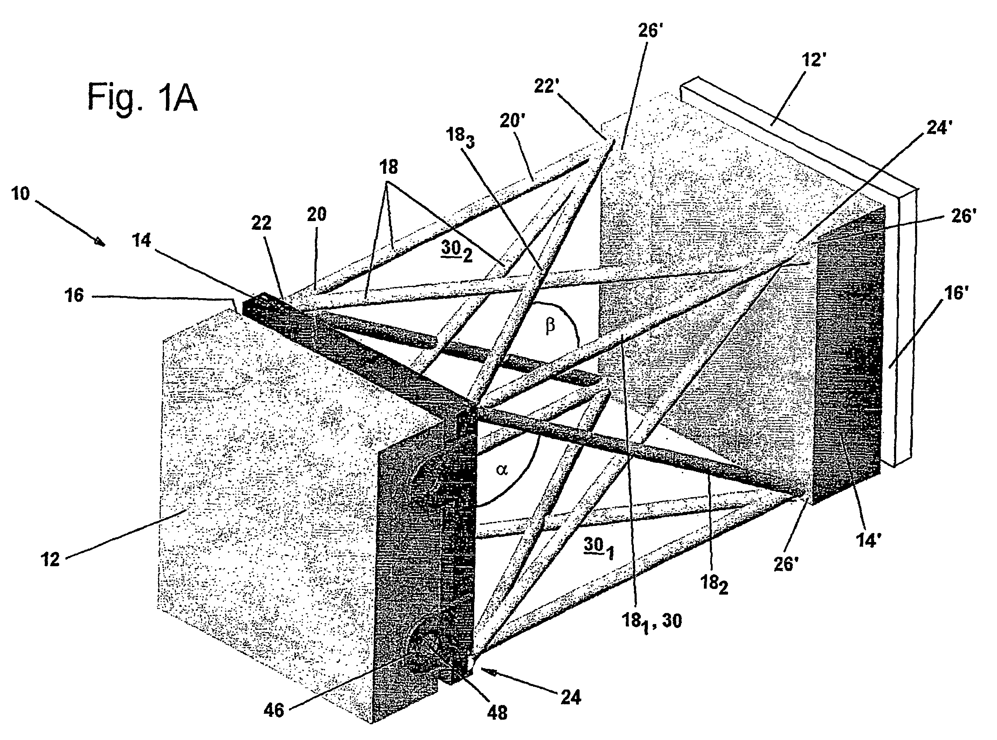

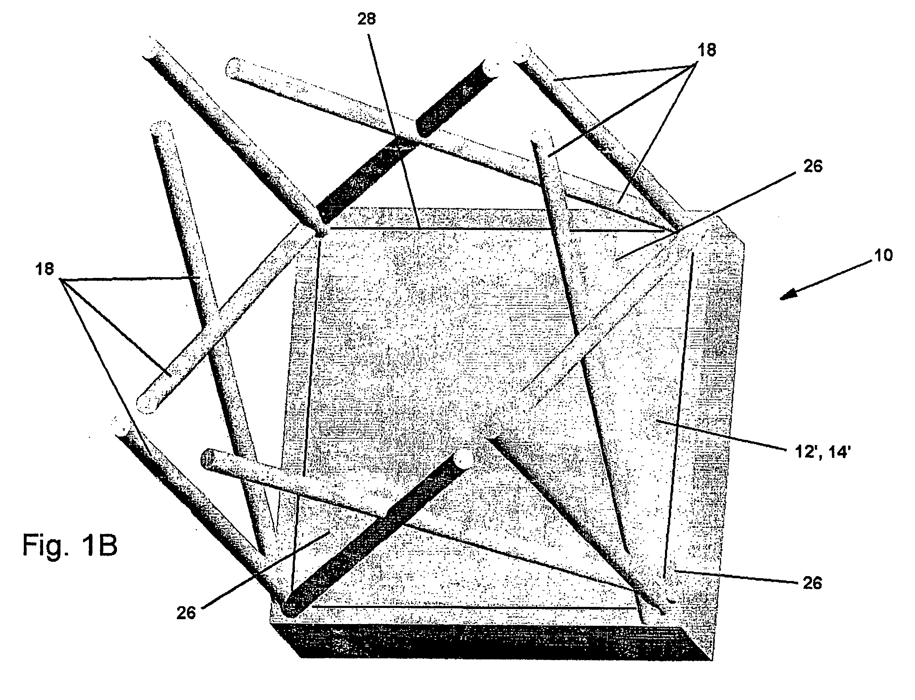

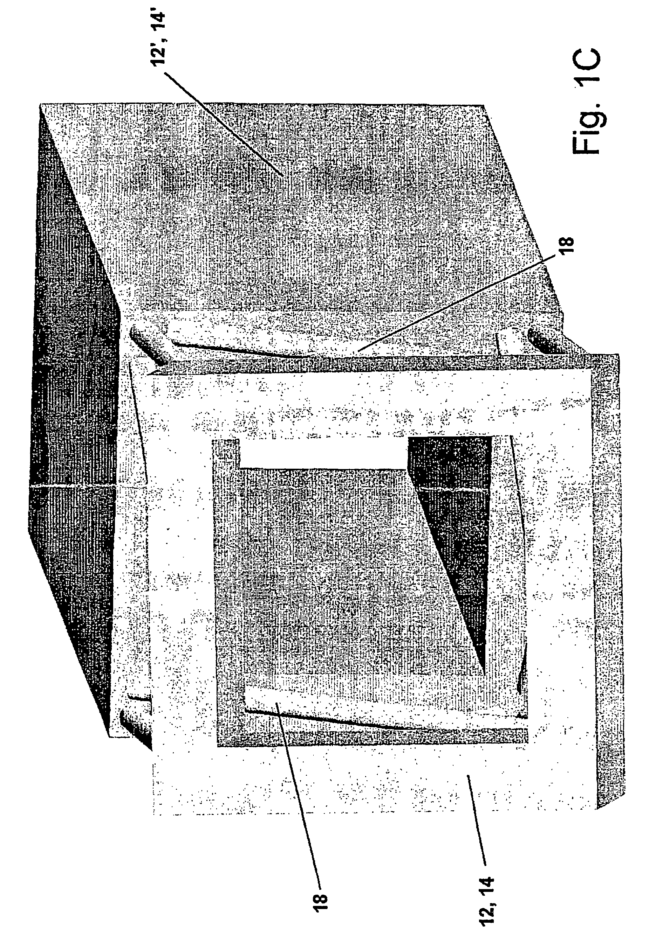

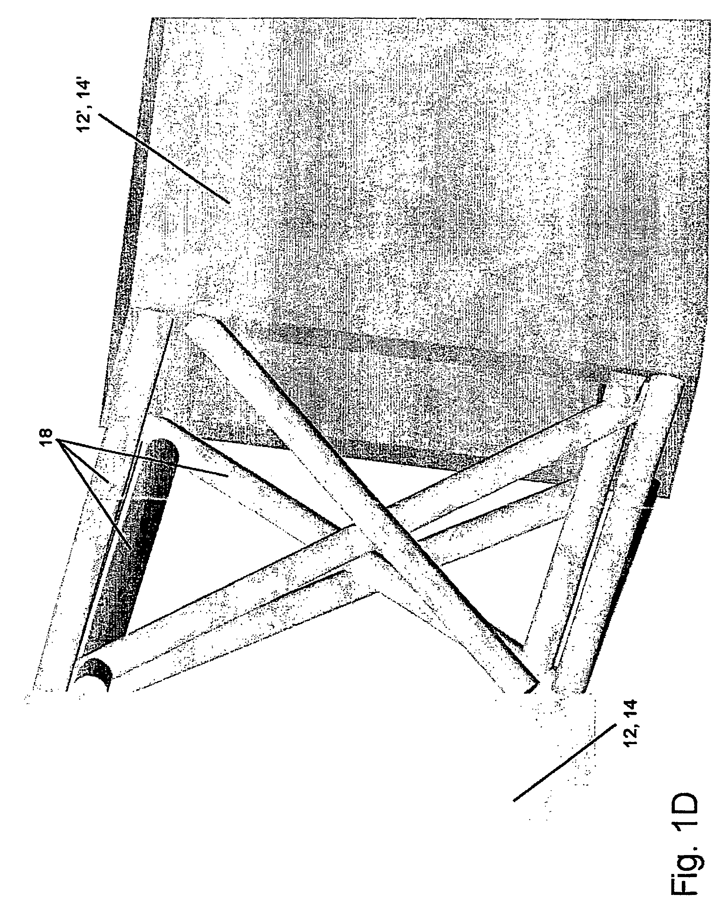

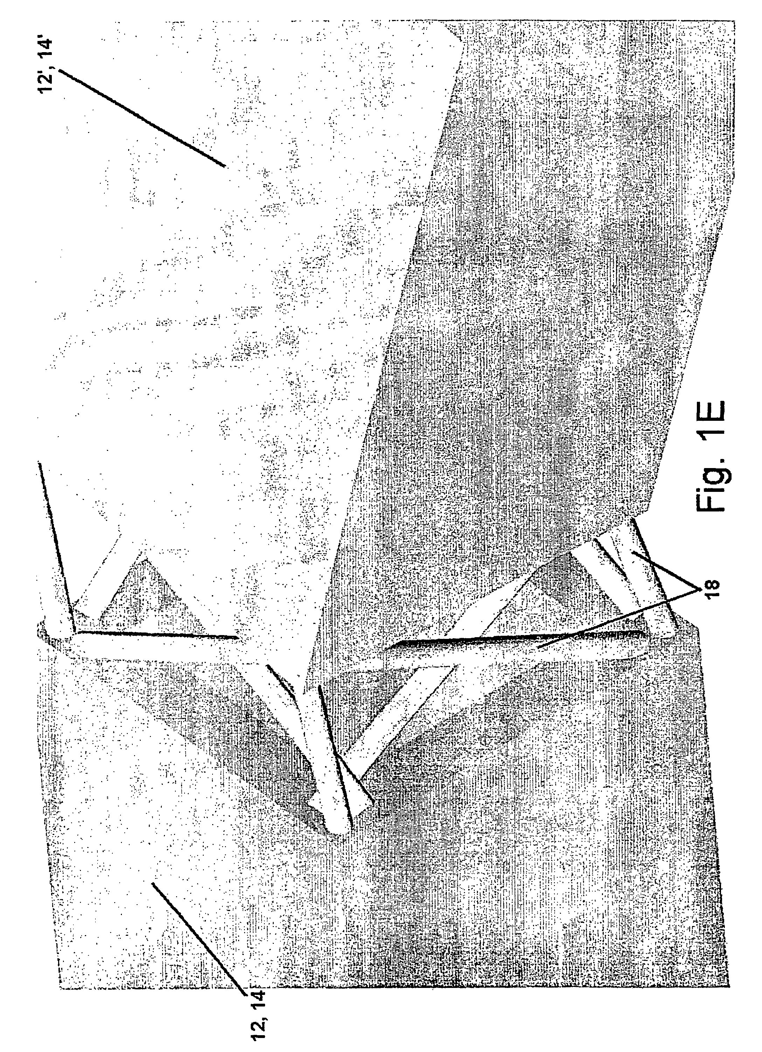

In den Fig. 1A, 1B, 1C, 1D und 1E ist nun eine erste Ausführungsform einer solchen Vorrichtung 10 nach der Erfindung schematisch dargestellt. Die Vorrichtung 10 weist dabei zwei Abstützelemente 14, 14' an einander zugewandten Enden 16, 16' der zwei Fahrzeugelemente 12, 12', nämlich des vorderen Fahrzeugelementes 12 und des hinteren Fahrzeugelementes 12' auf.

Weiterhin umfasst die Vorrichtung 10 nach der Erfindung wenigstens drei Verbindungseinrichtungen 18. Die Verbindungseinrichtungen 18 sind zwischen den zwei Abstützelementen 14, 14' angeordnet und dienen der Übertragung von Kräften zwischen den Abstützelementen 14, 14' und damit den Fahrzeugelementen 12, 12' selbst.

Die Verbindungseinrichtungen 18 sind sämtlich oder mit Ausnahme einer einzigen längenverstellbar.

Bei der in den Fig. 1A bis 1E gezeigten Ausführungsform sind sämtliche Verbindungseinrichtungen in deren Längsrichtungen verlängerbar oder verkürzbar. Die Enden 20, 20' der Verbindungseinrichtungen 18 sind jeweils über Kugelgelenke 22, 22' an den zwei Abstützelementen 14, 14' über mindestens drei Kraftübertragungspunkte 24, 24' abgestützt. Die Kraftübertragungspunkte 24, 24' sind dabei voneinander unterschiedlich, liegen aber in einer gemeinsamen Ebene.

Bei der vorliegenden Ausführungsform der erfindungsgemäßen Vorrichtung 10 nach den Fig. 1A bis 1E sind die Kugelgelenke 22, 22' mit den Kraftübertragungspunkten 24, 24' identisch. Mithin fallen auch die zwei Abstützelemente 14, 14' und die von den Kraftübertragungspunkten 24, 24' aufgespannten Ebenen zusammen.

Demgegenüber kann es jedoch ebenso möglich sein, dass die Kugelgelenke 22, 22' nicht zugleich die Kraftübertragungspunkte 24, 24' sind, an welchen die über die Verbindungseinrichtungen 18 an die zwei Abstützelemente 14, 14' zu übertragenden Kräfte eingeleitet werden. Eine solche Ausführungsform wird noch weiter unten beschrieben.

Durch die Längenverstellbarkeit der Verbindungseinrichtungen 18 einerseits und die Abstützung von den Enden 20, 20' der Verbindungseinrichtungen 18 über mindestens drei voneinander unterschiedliche, in einer gemeinsamen Ebene liegende Kraftübertragungspunkte 24, 24' andererseits ergibt sich eine Bauweise, die es gestattet, zwischen den zwei Abstützelementen 14, 14' der zwei Fahrzeugelemente 12, 12' sowohl Zugkräfte als auch Druckkräfte als auch Torsionskräfte zu übertragen.

Bei der in den Fig. 1A bis 1E gezeigten Ausführungsform der erfindungsgemäßen Vorrichtung 10 ist jede Verbindungseinrichtung 18 in Längsrichtung im Wesentlichen senkrecht oder in einem Winkel α, β zu den von den zwei Abstützelementen 14, 14' aufgespannten Ebenen angeordnet. Jede Verbindungseinrichtung 18, die in einem Winkel α, β zu den von den zwei Abstützelementen 14, 14' aufgespannten Ebenen angeordnet ist, erstreckt sich bei dem in den Fig. 1A bis 1E dargestellten Ausführungsbeispiel diagonal.

Insbesondere sind bei der Ausführungsform der erfindungsgemäßen Vorrichtung 10 nach den Fig. 1A bis 1E insgesamt zwölf Verbindungseinrichtungen 18 zwischen den zwei Abstützelementen 14, 14' der zwei Fahrzeugelemente 12, 12' des Fahrzeugs angeordnet. An jedem Abstützelement 14, 14' sind dabei vier Kraftübertragungspunkte 24, 24' vorgesehen. Die vier Kraftübertragungspunkte 24, 24' sind auf einem gedachten Kreis oder - wie hier - an den Ecken 26, 26' eines gedachten Quadrats 28, 28', Rechtecks oder sonstigen Polygons angeordnet. Jeweils drei Enden 20, 20' von drei der zwölf Verbindungseinrichtungen 18 sind an den Kraftübertragungspunkten 24, 24' über entsprechende Kugelgelenke 22, 22' zur freien Bewegung in dreidimensionaler Richtung angelenkt.

Die jeweils drei Verbindungseinrichtungen 18 zwischen den zwei Abstützelementen 14, 14' sind in Ebenen angeordnet, die jeweils senkrecht zu der gemeinsamen Ebene der Kraftangriffspunkte 24, 24', also bei dem gezeigten Ausführungsbeispiel senkrecht zu den Abstützelementen 14, 14', und gleichzeitig durch den einen zugeordneten Kraftübertragungspunkt 24, 24' verlaufen. Insoweit befindet sich eine 18₁ der jeweils drei Verbindungseinrichtungen 18 auf der Schnittlinie 30 von zwei senkrecht aufeinanderstehenden Ebenen 30₁, 30₂. Die zwei weiteren 18₂, 18₃ der jeweils drei Verbindungseinrichtungen 18 erstrecken sich demgegenüber diagonal in den zwei senkrecht aufeinanderstehenden Ebenen 30₁, 30₂.

Mit anderen Worten erstreckt sich die Verbindungseinrichtung 18₁ von dem oberen rechten Kugelgelenk 22 bzw. Kraftübertragungspunkt 24 an dem vorderen Abstützelement 14 zu dem oberen rechten Kugelgelenk 22' bzw. Kraftübertragungspunkt 24' an dem hinteren Abstützelement 14' auf der Schnittlinie 30 der zwei Ebenen 30₁, 30₂, die Verbindungseinrichtung 18₂ von dem oberen rechten Kugelgelenk 22 bzw. Kraftübertragungspunkt 24 an dem vorderen Abstützelement 14 zu dem unteren rechten Kugelgelenk 22' bzw. Kraftübertragungspunkt 24' an dem hinteren Abstützelement 14' diagonal in der Ebene 30₁, die Verbindungseinrichtung 18₃ von dem oberen rechten Kugelgelenk 22 bzw. Kraftübertragungspunkt 24 an dem vorderen Abstützelement 14 zu dem oberen linken Kugelgelenk 22' bzw. Kraftübertragungspunkt 24' an dem hinteren Abstützelement 14' diagonal in der Ebene 30₂, usw.

Da die von den Kraftübertragungspunkten 24, 24' aufgespannte Ebenen mit den zwei Abstützelementen 14, 14' zusammenfallen, verlaufen die Verbindungseinrichtungen 18 somit in senkrecht zu den Abstützelementen 14, 14' stehenden Ebenen 30₁, 30₂. Die Verbindungseinrichtungen 18 sind sämtlich in randseitige Bereiche 32, 32' der Abstützelemente 14, 14' ausgelagert.

Demgegenüber ist es jedoch grundsätzlich ebenso möglich, ein oder mehrere Verbindungseinrichtungen 18 in Ebenen anzuordnen, die nicht mit den Ebenen 30₁, 30₂, also im Wesentlichen senkrecht zu den Abstützelementen 14, 14', verlaufen.

In diesem Zusammenhang ist beispielsweise daran gedacht, eine erste Verbindungseinrichtung 18 zwischen dem oberen rechten Kugelgelenk 22 bzw. Kraftübertragungspunkt 24 an dem Abstützelement 14 und dem unteren linken Kugelelement 22' bzw. Kraftübertragungspunkt 24' an dem Abstützelemente 14' anzulenken, eine zweite Verbindungseinrichtung 18 von dem oberen linken Kugelgelenk 22 bzw. Kraftübertragungspunkt 24 an dem Abstützelement 14 und dem unteren rechten Kugelgelenk 22' bzw. Kraftübertragungspunkt 24' an dem Abstützelement 14' anzulenken usw. (nicht gezeigt).

Die Ausführungsform der Vorrichtung 10 nach den Fig. 1A bis 1E hat gegenüber dieser zuletzt erwähnten Ausführungsform allerdings den zusätzlichen Vorteil, dass zwischen den zwei Abstützelementen 14, 14' und den Verbindungseinrichtungen 18 zwischen den zwei Abstützelementen 14, 14' ein begehbarer Steg oder dergleichen Übergang (nicht gezeigt) vorgesehen sein kann. Auf diese Weise ist es daher möglich, dass Personal und/oder Passagiere, welche mit einem solchen Fahrzeug befördert werden, von einem Fahrzeugelement 12 zu einem benachbarten Fahrzeugelement 12', und umgekehrt, wechseln zu können. Insoweit ist ein Personenübergang zwischen zwei benachbarten Fahrzeugelementen 12, 12' möglich, jedenfalls nicht durch schräg verlaufende Verbindungseinrichtungen 18 unnötig erschwert.

Ohne im Einzelnen dargestellt zu sein, ist es in diesem Zusammenhang besonders zweckmäßig, die zwei Abstützelemente 14, 14' über einen dazwischen angeordneten längselastischen Faltenbalg zu verbinden. Der Faltenbalg kann dabei zugleich die Verbindungseinrichtungen 18 wenigstens außen, insbesondere zusätzlich aber auch innen, umschließen, so dass die erfindungsgemäße Vorrichtung 10 insgesamt gegen Schmutz, Staub, Wasser, wie Salzwasser, und ähnlichem geschützt werden kann. Die Funktionalität der erfindungsgemäßen Vorrichtung 10 wird hierdurch nicht beeinträchtigt. Deren Lebensdauer wird jedoch wesentlich erhöht.

Die in den Fig. 1A bis 1E dargestellte Ausführungsform der erfindungsgemäßen Vorrichtung 10 eignet sich ganz besonders zur lösbaren Verbindung von zwei Fahrzeugelementen 12, 12' eines Landfahrzeugs und hierbei insbesondere eines Schienenfahrzeugs. Durch die Vorrichtung 10 werden die einander benachbarten Fahrzeugelemente 12, 12' untereinander jeweils starr verbunden, wodurch die verkehrstechnische Ausnutzung verbessert wird und Vorteile hinsichtlich der sicherheitstechnischen Standards herbeigeführt werden.

So kann beispielsweise mit Hilfe der vorbeschriebenen Ausführungsform der Vorrichtung 10 nach der Erfindung selbst ein Verlust eines Radreifens oder sogar eines ganzen Drehgestelles eines Schienenfahrzeuges aufgefangen werden. Ein Eisenbahnunglück entsprechend demjenigen bei Eschede kann auf diese Weise sicher vermieden werden. Darüber hinaus ist ein Zusammendrükken bzw. Zusammenstauchen einzelner Fahrzeugelemente 12, 12' eines Fahrzeugs infolge des sogenannten Ziehharmonikaeffektes ausgeschlossen. Daher kann sich auch ein Eisenbahnunglück wie dasjenige in Brühl/Bonn bei Verwendung einer erfindungsgemäßen Vorrichtung 10 nicht mehr wiederholen.

Wenn die Ausführungsform der erfindungsgemäßen Vorrichtung 10 nach den Fig. 1A bis 1E auch insgesamt zwölf Verbindungseinrichtungen 18 aufweist, so ist es ohne weiteres denkbar, lediglich fünf Verbindungseinrichtungen 18 zur Übertragung von Zug-, Druck- und Torsionskräften zwischen den zwei Abstützelementen 14, 14' der zwei Fahrzeugelemente 12, 12' vorzusehen, sofern die Vorrichtung 10 für ein Landfahrzeug, insbesondere ein Schienenfahrzeug, bestimmt ist. Die Funktionsfähigkeit in technischer Hinsicht ist gleichermaßen erreicht.

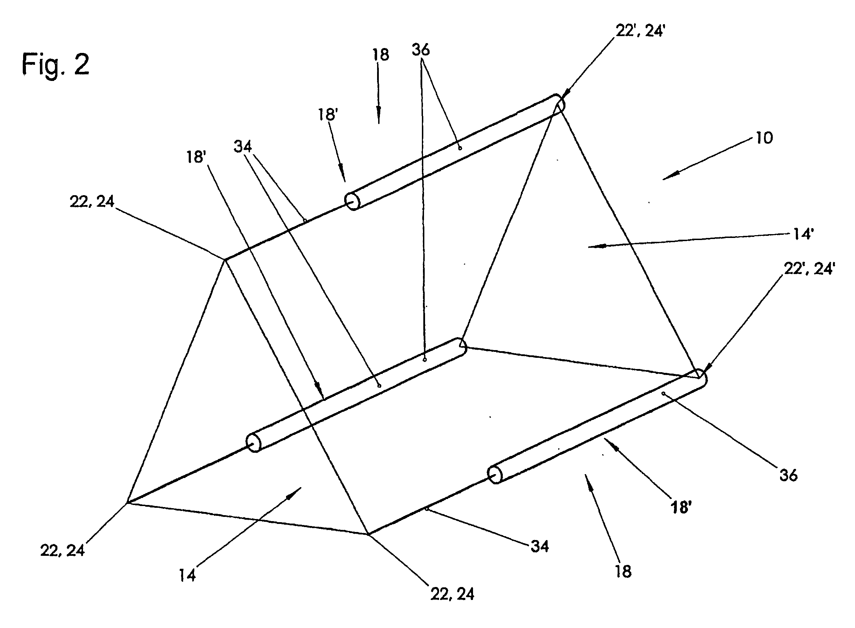

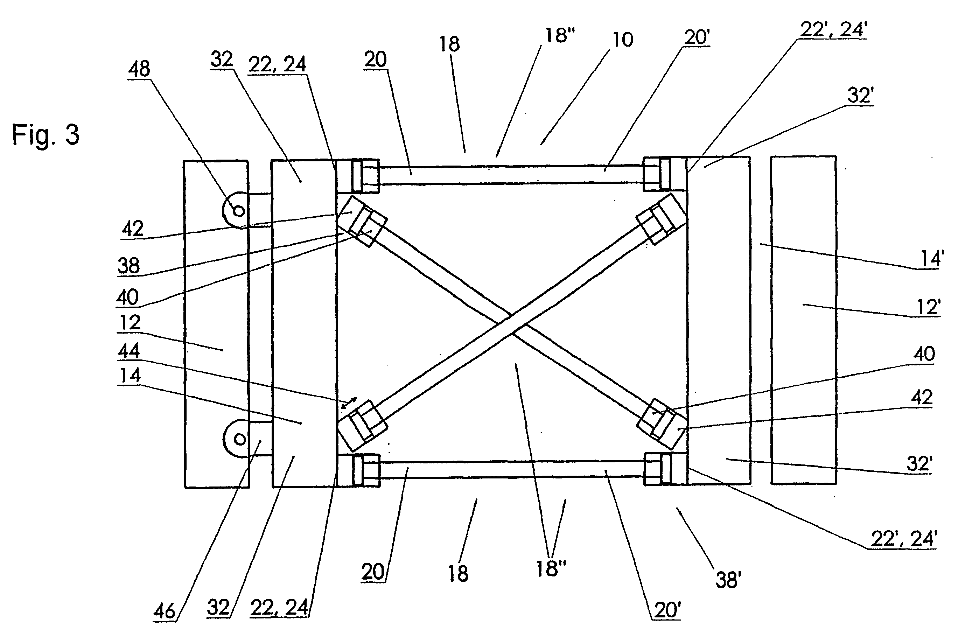

Die eigentliche Längenverstellbarkeit der Verbindungseinrichtungen 18 bei der Ausführungsform der erfindungsgemäßen Vorrichtung 10 nach den Fig. 1A bis 1E lässt sich grundsätzlich durch zwei Ausgestaltungen realisieren, die nachfolgend im Zusammenhang mit den Ausführungsformen nach der Fig. 2 bzw. 3 im Einzelnen erläutert wird.

Die Fig. 1C bis 1E zeigen die Abstützelemente 14, 14' in verschiedener Stellung zueinander, wobei die Verbindungseinrichtungen 18 eine starre Kopplung der Fahrzeugelemente 12, 12' sicherstellen.

In der Fig. 2 ist eine Ausführungsform der erfindungsgemäßen Vorrichtung 10 dargestellt, die lediglich drei Verbindungseinrichtungen 18 aufweist, um Zug-, Druck- und Torsionskräfte zwischen den zwei Abstützelementen 14, 14' von zwei Fahrzeugelementen 12, 12' eines Wasserfahrzeugs, zum Beispiel eines Schiffes, zu übertragen.

Die zwei Abstützelemente 14, 14' bzw. die von den Kugelgelenken 22, 22' bzw. dazugehörigen Kraftübertragungspunkten 24, 24' aufgespannten Ebenen sind in Form eines gleichschenkligen Dreiecks ausgebildet. Wenn auch jede andere Anordnung der Verbindungseinrichtungen 18 zwischen den Abstützelementen 14, 14' denkbar ist, hat sich eine solche konstruktive Ausgestaltung als besonders vorteilhaft herausgestellt, da die Krafteinleitung von dem einen Abstützelement 14 bzw. 14' auf das andere Abstützelement 14' bzw. 14 ausgesprochen gleichmäßig erfolgen kann.

Die drei Verbindungseinrichtungen 18 sind dabei sämtlich längenverstellbar. Zu diesem Zweck umfasst jede der drei Verbindungseinrichtungen 18 ein stabförmiges Verbindungselement 18', das teleskopartig längenverstellbar ist. Das stabförmige Verbindungselement 18' umfasst dabei eine Kolbenstange 34 oder dergleichen Stab und eine die Kolbenstange 34 aufnehmende Hülse 36. Die Enden 20, 20' sind über die Kugelgelenke 22, 22' unmittelbar an den zwei Abstützelementen 14, 14' abgestützt.

Die längenverstellbare Verbindungseinrichtung 18 ist dabei hydraulisch, pneumatisch, mechanisch oder elektrisch betätigbar. Zu diesem Zweck umfasst die längenverstellbare Verbindungseinrichtung 18 mit dem längenverstellbaren Verbindungselement 18' beispielsweise eine Hydraulikeinheit, Pneumatikeinheit, Lineareinheit, Spindeleinheit oder auch einen Linearmotor (nicht im Einzelnen dargestellt).

In der Fig. 3 ist eine weitere Ausführungsform einer erfindungsgemäßen Vorrichtung 10 gezeigt. Die Vorrichtung 10 nach der Fig. 3 ist mit fünf Verbindungseinrichtungen 18 ausgestattet, wovon allerdings lediglich vier Verbindungseinrichtungen 18 sichtbar sind. Die fünfte Verbindungseinrichtung 18 ist beispielsweise durch die in der Fig. 3 dem unteren Rand nächstgelegene weitere Verbindungseinrichtung 18 verdeckt.

Alternativ oder auch kumulativ zu der konstruktiven Ausgestaltung der Verbindungseinrichtung 18 nach der Fig. 2 ist bei der Ausführungsform der Verbindungseinrichtung 18 ein stabförmiges Verbindungselement 18" mit konstanter Länge vorgesehen. Mindestens ein Ende 20, 20' des stabförmigen Verbindungselementes 18'' ist über das Kugelgelenk 22, 22' abgestützt, und zwar unter Zwischenanordnung eines Längeneinstellungselementes 38, 38', das dem jeweiligen Abstützelement 14, 14' zugeordnet ist.

Wenn auch grundsätzlich lediglich ein Längeneinstellungselement 38, 38' an einem der zwei Enden 20, 20' des stabförmigen Verbindungselementes 18'' zur Längenverstellbarkeit der Verbindungseinrichtung 18 ausreichend ist, lässt sich durch die technische Verwirklichung von jeweils einem Längeneinstellungselement 38, 38' an jedem der beiden Enden 20, 20' eine vor allem schnellere Einstellungsmöglichkeit bzw. Längenveränderung der jeweiligen Verbindungseinrichtung 18 erreichen.

Das bzw. die Längeneinstellungselement/e 38, 38' der längenverstellbaren Verbindungseinrichtung 18 ist/sind in entsprechender Weise wie das längenverstellbare stabförmige Verbindungselement 18' der Verbindungseinrichtung 18 hydraulisch, pneumatisch, mechanisch oder elektrisch betätigbar. Insoweit umfasst die längenverstellbare Verbindungseinrichtung 18 mit dem/den Längeneinstellungselement/en 18'' gleichermaßen eine Hydraulikeinheit, Pneumatikeinheit, Lineareinheit, Spindeleinheit oder einen Linearmotor.

Wie aus der Fig. 3 hiervorgeht, sind bei der Ausführungsform der Vorrichtung 10 sämtliche Längeneinstellungselemente 38, 38' als Hydraulikzylinder ausgestaltet, bei denen in den Kammern 40, 42 durch entsprechenden Druckaufbau eine mittels eines Wegmesssystems 44 kontrollierte und damit definierte Position erhalten werden kann.

Ohne im Einzelnen dargestellt zu sein, bietet sich eine erfindungsgemäße Vorrichtung 10 mit insgesamt sechs Verbindungseinrichtungen 18 zur Übertragung von Zug-, Druck- und Torsionskräften zwischen den zwei Abstützelementen 14, 14' von zwei Fahrzeugelementen 12, 12' an, wenn es sich bei dem Fahrzeug um ein Flugzeug oder einen Flugkörper im Weltall handelt. Um zwei einander zugewandte Abstützelemente 14, 14' in der Atmosphäre bzw. im Weltall zueinander relativ zu bewegen, d.h. eine Veränderung der von den Abstützelementen 14, 14' aufgespannten Ebenen zueinander vorzunehmen, sind aufgrund der vorhandenen Freiheitsgrade zumindest sechs solcher Verbindungeinrichtungen 18 notwendig.

Um bei einer oder mehreren der Ausführungsformen der erfindungsgemäßen Vorrichtung 10, die in den Fig. 2 und 3 bzw. auch ohne Bezugnahme auf entsprechende Figuren vorbeschrieben wurden, eine Vorspannung zwischen den zwei Abstützelementen 14, 14' der einander benachbarten Fahrzeugelemente 12, 12' zu erzeugen, ist eine weitere Verbindungseinrichtung 18 erforderlich. Lediglich bei der Ausführungsform der Vorrichtung 10, die in den Fig. 1A bis 1E gezeigt ist, ist eine solche zusätzliche Verbindungseinrichtung 18 aufgrund der bereits vorhandenen Anzahl von Verbindungseinrichtungen 18 nicht notwendig.

Im Allgemeinen ist es möglich, die zwei Abstützelemente 14, 14' mit den dazwischen angeordneten wenigstens drei Verbindungseinrichtungen 18 an den einander zugewandten Enden 16, 16' der zwei Fahrzeugelemente 12, 12' integral anzubringen. Von Vorteil ist bei einer solchen konstruktiven Ausgestaltung, dass wenigstens ein Abstützelement 14, 14' mit dem zugeordneten Ende 16, 16' des einen der zwei Fahrzeugelemente 12, 12' des Fahrzeugs lösbar verbunden ist. Erst hierdurch ist eine variable und vielseitige Kopplung möglich, ohne welche ein wirtschaftlicher Betrieb von Gliederfahrzeugen auf dem Lande, wie zum Beispiel Güterzüge, oder zu Wasser, wie zum Beispiel Schubverbände, die aus mehreren Containerschiffen bestehen, nicht möglich.

Beispielhaft ist bei der Ausführungsform der Vorrichtung 10 nach den Fig. 1 bzw. 3 ein Abstützelement 14 gezeigt, das seitliche Flansche 46 mit entsprechenden Bohrungen 48 aufweist, über welche das Abstützelement 14 mittels nicht gezeigter Bolzen, Schrauben oder dergleichen Verbindungselemente mit dem entsprechenden Fahrzeugelement 12 lösbar befestigt ist.

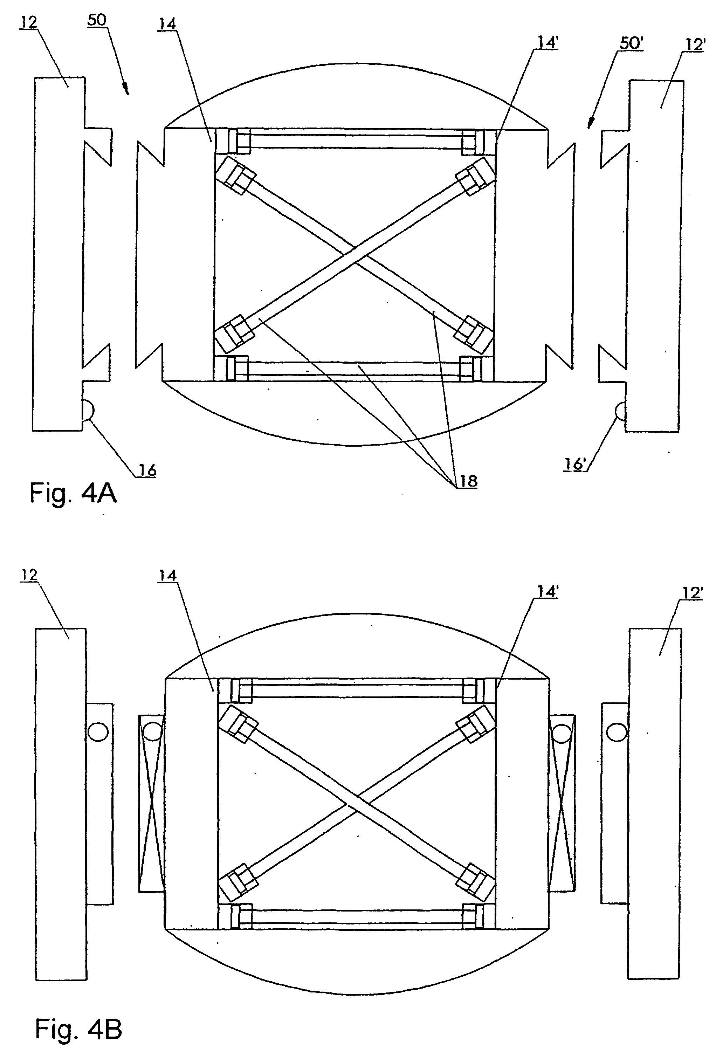

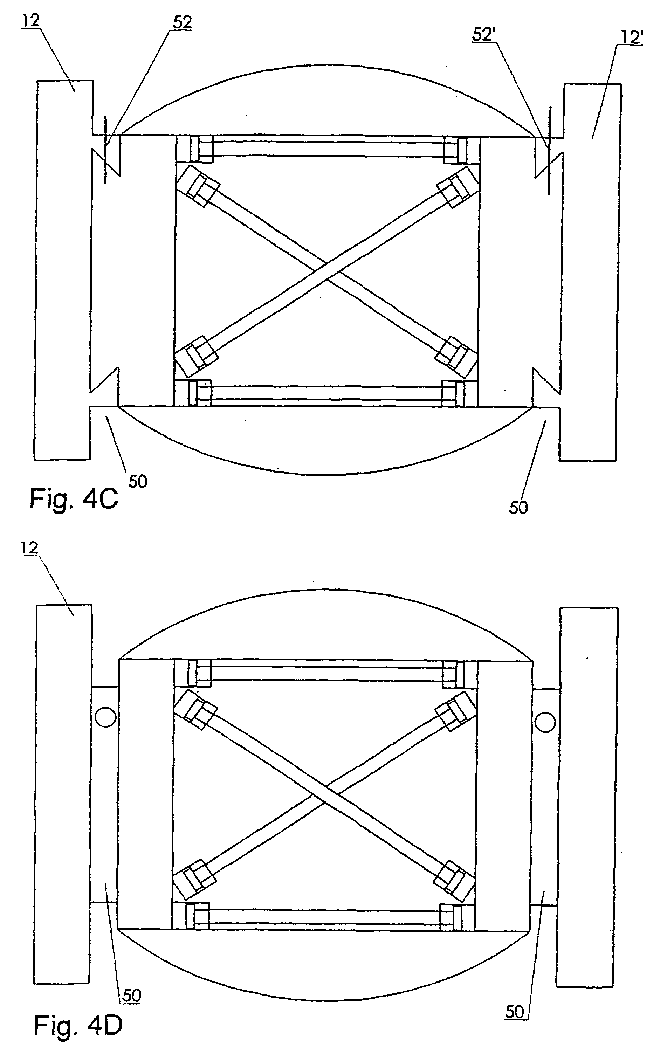

Besonders vorteilhaft ist alternativ dazu die konstruktive Ausgestaltung der Ausführungsform der erfindungsgemäßen Vorrichtung 10 nach den Fig. 4A bis 4D. Danach sind die zwei Abstützelemente 14, 14' mit den dazwischen angeordneten wenigstens drei Verbindungseinrichtungen 18 an den einander zugewandten Enden 16, 16' der zwei Fahrzeugelemente 12, 12' lösbar befestigt. Die zwei Abstützelemente 14, 14' sind zu diesem Zweck an den einander zugewandten Enden 16, 16' über Reibschluss- und/oder Formschluss-Verbindungen 50, 50' positionsgenau angebracht. Als Reibschluss- und/oder Formschluss-Verbindungen 50, 50' sind entsprechend der Ausführungsform der Fig. 4A bis 4D Schwalbenschwanz-Verbindungen vorgesehen. Ebenso ist es jedoch denkbar, Feder-Nut-Verbindungen als Formschluss-Verbindungen 50, 50' vorzusehen. Auch ist es möglich, als Reibschluss- und/oder Formschluss-Verbindungen Schraubverbindungen oder anstelle dessen Magnetverbindungen oder dergleichen vorzusehen.

Die zwei Abstützelemente 14, 14' bei der Ausführungsform nach den Fig. 4A bis 4D sind mit den dazwischen angeordneten wenigstens drei Verbindungseinrichtungen 18 entweder senkrecht von oben oder waagerecht von der Seite an den Enden 16, 16' der zwei Fahrzeugelemente 12, 12' in die vorgesehenen Formschluss-Verbindungen 50, 50' einsetzbar und mit diesen dann durch Bolzen 52, 52', Stifte, Schrauben oder sonstige Rast-, Schnappoder dergleichen -einrichtungen (nicht dargestellt) gegen selbsttätiges Lösen gesichert.

Ohne im Einzelnen dargestellt zu sein, sind die Verbindungseinrichtungen 18 weiterhin mit wenigstens einer Steuereinrichtung zu deren Steuerung bzw. Regelung verbunden. Die Verbindungseinrichtungen 18, d.h. die längenverstellbaren stabförmigen Verbindungselemente 18' und/oder Längeneinstellungselemente 18'', sind dabei mit der wenigstens einen Steuereinrichtung jeweils individuell oder sämtlich gemeinsam aufeinander abgestimmt einstellbar. Auszugleichende Bewegungen, die von außen auf die zwei Fahrzeugelemente 12, 12' des Fahrzeugs ausgeübt werden, können von der erfindungsgemäßen Vorrichtung 10 damit sofort ausgeglichen und bei Bedarf in Echtzeit entsprechend gedämpft, aktiv gesteuert, vorgespannt oder in sonstiger Weise korrigiert werden. Auf diese Weise wird erreicht, dass das gesamte Fahrzeug ein vordefiniertes bzw. auch ein vordefinierbares Fahrverhalten erhält.

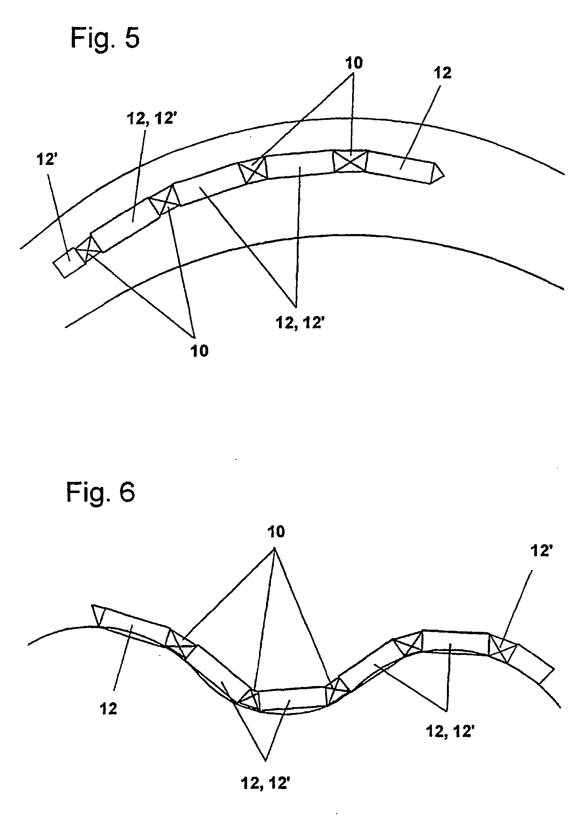

Beispielsweise ist es möglich, mit der erfindungsgemäßen Vorrichtung 10 eine kontrollierte Lenkbewegung zu erhalten. Insoweit ist eine gezielte Lenkung des Fahrzeugs möglich. Es lassen sich wesentlich kleinere Lenkungsradien erreichen. Zwangsläufig ergibt sich hieraus wiederum die Möglichkeit, Schubverbände wesentlich größerer Länge als bisher möglich und/oder erlaubt zu betreiben, und zwar sowohl in der Binnenschifffahrt entsprechend der Fig. 5 als auch in der Hochseeschifffahrt entsprechend der Fig. 6. Aufgrund wegfallender Längenbeschränkungen ergeben sich damit einhergehend wiederum größere Lastkapazitäten.

Schließlich kann die wenigstens eine Steuereinrichtung noch zusätzlich mit einer Sende-/Empfangseinrichtung zur Steuerung mittels Funk und/oder GPS (global positioning system)- bzw. GSM (groupe speciale mobile)-Standard und/oder Infrarot versehen sein.

Die erfindungsgemäße Vorrichtung 10 ist nicht auf die vorhergehenden Ausführungsbeispiele beschränkt. Zur konstruktiven Vereinfachung ist es beispielsweise ebenso denkbar, eine der wenigstens drei Verbindungseinrichtungen 18 als ein stabförmiges Verbindungselement mit konstanter Länge.auszubilden, welches an dessen Enden 20, 20' jeweils ein Kugelgelenk 22, 22' aufweist, das mit den Kraftübertragungspunkten 24, 24' an dem jeweiligen Abstützelement 14, 14' bzw. der dazugehörigen Ebene zusammenfällt. Alternativ ist es ebenso möglich, anstelle einer solchen Verbindungseinrichtung 18 mit einem stabförmigen Verbindungselement konstanter Länge und endseitig daran angeordneten Kugelelementen 22, 22' zwei stabförmige Verbindungselemente vorzusehen, die jeweils mit einem Ende an dem zugeordneten Abstützelement 14 bzw. 14' fixiert sind und mit deren anderen Enden, die einander zugewandt sind, über ein gemeinsames Kugelgelenk verbunden sind.

## Patentansprüche

1. Vorrichtung zur lösbaren Verbindung von zwei in Reihe angeordneten Fahrzeugelementen (12, 12') eines Fahrzeugs mit zwei Abstützelementen (14, 14') an einander zugewandten Enden (16, 16') der zwei Fahrzeugelemente (12, 12') und zwischen den zwei Abstützelementen (14, 14') angeordneten Verbindungseinrichtungen (18) zur Übertragung von Kräften zwischen den Fahrzeugelementen (12, 12'), wobei die Enden (20, 20') der Verbindungseinrichtungen (18) jeweils über Kugelgelenke (22, 22') an den zwei Abstützelementen (14, 14') über mindestens drei von einander unterschiedliche, in einer gemeinsamen Ebene liegende Kraftübertragungspunkte (24, 24') abgestützt sind, derart, dass zwischen den zwei Abstützelementen (14, 14') der zwei Fahrzeugelemente (12, 12') Zug-, Druck- und Torsionskräfte übertragbar sind **dadurch gekennzeichnet, dass** wenigstens drei Verbindungseinrichtungen (18) vorgesehen sind, die sämtlich oder mit Ausnahme einer einzigen durch aktive Steuerung oder Regelung längenverstellbar sind.

2. Vorrichtung nach Anspruch 1, **dadurch gekennzeichnet, dass** mindestens eine der Verbindungseinrichtungen (18) ein stabförmiges Verbindungselement (18') umfasst, das teleskopartig längenverstellbar ist, wobei dessen Enden (20, 20') über die Kugelgelenke (22, 22') unmittelbar an den zwei Abstützelementen (14, 14') abgestützt sind.

3. Vorrichtung nach einem der Ansprüchen 1 oder 2, **dadurch gekennzeichnet, dass** mindestens eine der Verbindungseinrichtungen (18) ein stabförmiges Verbindungselement (18'') konstanter Länge umfasst, wobei mindestens ein Ende (20, 20') des Verbindungselementes (18'') über das Kugelgelenk (22, 22') unter Zwischenanordnung eines Längeneinstellungselementes (38, 3.8') an dem zugeordneten Abstützelement (14, 14') abgestützt ist.

4. Vorrichtung nach einem der Ansprüche 1 bis 3, **dadurch gekennzeichnet, dass** eine der Verbindungseinrichtungen (18) ein stabförmiges Verbindungselement konstanter Länge umfasst, wobei dessen Enden über die Kugelgelenke (22, 22'). unmittelbar an den zwei Abstützelementen (14, 14') abgestützt sind.

5. Vorrichtung nach einem der Ansprüche 1 bis 4, **dadurch gekennzeichnet, dass** mindestens eine der Verbindungseinrichtungen (18) in Längsrichtung im Wesentlichen senkrecht oder in einem Winkel (α, β) zu den von den mindestens drei Kraftübertragungspunkten (24, 24') aufgespannten Ebenen angeordnet ist.

6. Vorrichtung nach Anspruch 5, **dadurch gekennzeichnet, dass** sich mindestens eine der Verbindungseinrichtungen (18), die in einem Winkel (α, β) zu den von den mindestens drei Kraftübertragungspunkten (24, 24') aufgespannten Ebenen angeordnet ist, diagonal erstreckt.

7. Vorrichtung nach einem der Ansprüche 1 bis 6, **dadurch gekennzeichnet, dass** drei Verbindungseinrichtungen (18) zur Übertragung von Zug-, Druck- und Torsionskräften zwischen den zwei Abstützelementen (14, 14') der zwei Fahrzeugelemente (12, 12') des als Wasserfahrzeug ausgebildeten Fahrzeugs angeordnet sind.

8. Vorrichtung nach einem der Ansprüche 1 bis 6, **dadurch gekennzeichnet, dass** fünf Verbindungseinrichtungen (18) zur Übertragung von Zug-, Druck- und Torsionskräften zwischen den zwei Abstützelementen (14, 14') der zwei Fahrzeugelemente (12, 12') des als Landfahrzeug, insbesondere Schienenfahrzeug, ausgebildeten Fahrzeugs angeordnet sind.

9. Vorrichtung nach Anspruch 8, **dadurch gekennzeichnet, dass** die fünf Verbindungseinrichtungen (18) jeweils ein längenverstellbares, stabförmiges Verbindungselement (18') aufweisen.

10. Vorrichtung nach Anspruch 8, **dadurch gekennzeichnet, dass** die fünf Verbindungseinrichtungen (18) aus zwei längenverstellbaren, stabförmigen Verbindungselementen (18'), die diagonal zwischen den zwei Abstützelementen (14, 14') angeordnet sind, und drei stabförmigen Verbindungselementen (18'') konstanter Länge mit jeweils einem Längeneinstellelement (40, 40') gebildet sind.

11. Vorrichtung nach einem der Ansprüche 1 bis 6, **dadurch gekennzeichnet, dass** sechs Verbindungseinrichtungen (18) zur Übertragung von Zug-, Druck- und Torsionskräften zwischen den zwei Abstützelementen (14, 14') der zwei Fahrzeugelemente (12, 12') des als Flugzeug oder Flugkörper im Weltall ausgebildeten Fahrzeugs angeordnet sind.

12. Vorrichtung nach einem der Ansprüche 1 bis 11, **dadurch gekennzeichnet, dass** eine weitere Verbindungseinrichtung (18) zur Erzeugung einer Vorspannung zwischen den zwei Abstützelementen (14, 14') vorgesehen ist..

13. Vorrichtung nach einem der Ansprüche 1 bis 6, **dadurch gekennzeichnet, dass** zwölf Verbindungseinrichtungen (18) zwischen den zwei Abstützelementen (14, 14') der zwei Fahrzeugelemente (12, 12') des Fahrzeugs angeordnet sind.

14. Vorrichtung nach Anspruch 13, **dadurch gekennzeichnet, dass** an jedem Abstützelement (14, 14') vier Kraftübertragungspunkte (24, 24') vorgesehen sind, die auf einem gedachten Kreis oder an den Ecken (26, 26') eines gedachten Quadrats (28, 28'), Rechtecks oder sonstigen Polygons zur Anlenkung von jeweils drei Enden (20, 20') von drei der zwölf Verbindungseinrichtungen (18) angeordnet sind.

15. Vorrichtung nach Anspruch 14, **dadurch gekennzeichnet, dass** die jeweils drei Verbindungseinrichtungen (18) zwischen den zwei Abstützelementen (14, 14') in Ebenen angeordnet sind, die jeweils senkrecht zu der gemeinsamen Ebene der Kraftübertragungspunkte (24, 24') und durch den einen zugeordneten Kraftübertragungspunkt (24, 24') verlaufen.

16. Vorrichtung nach Anspruch 15, **dadurch gekennzeichnet, dass** sich eine (18₁) der jeweils drei Verbindungseinrichtungen (18) auf der Schnittlinie (30) von zwei senkrecht aufeinander stehenden Ebenen (30₁, 30₂) und die zwei weiteren (18₂, 18₃) der jeweils drei Verbindungseinrichtungen (18) diagonal in den zwei senkrecht aufeinander stehenden Ebenen (30₁, 30₂) erstrecken.

17. Vorrichtung aus einem der Ansprüche 1 bis 16, **dadurch gekennzeichnet, dass** sich die Kraftübertragungspunkte (24, 24') an den zwei Abstützelementen (14, 14') im Wesentlichen in deren randseitigen Bereich (32, 32') befinden und die Verbindungseinrichtungen (18) in senkrecht zu den Abstützelementen (14, 14') stehenden Ebenen verlaufen.

18. Vorrichtung nach Anspruch 17, **dadurch gekennzeichnet, dass** zwischen den zwei Abstützelementen (14, 14') und den Verbindungseinrichtungen (18) zwischen den zwei Abstützelementen (14, 14') ein begehbarer Steg oder dergleichen Übergang vorgesehen ist.

19. Vorrichtung nach einem der Ansprüche 1 bis 18, **dadurch gekennzeichnet, dass** die zwei Abstützelemente (14, 14') über einen dazwischen angeordneten längselastischen Faltenbalg verbunden sind.

20. Vorrichtung nach Anspruch 19, **dadurch gekennzeichnet, dass** der Faltenbalg die Verbindungseinrichtungen (18) wenigstens außen, insbesondere zusätzlich innen, umschließt.

21. Vorrichtung nach einem der Ansprüche 1 bis 20, **dadurch gekennzeichnet, dass** mindestens eine der Verbindungseinrichtungen (18) hydraulisch, pneumatisch, mechanisch oder elektrisch längenverstellbar ist.

22. Vorrichtung nach Anspruch 21, **dadurch gekennzeichnet, dass** mindestens eine der Verbindungseinrichtungen (18) eine Hydraulikeinheit, Lineareinheit, Spindeleinheit oder einen Linearmotor umfasst.

23. Vorrichtung nach einem der Ansprüche 1 bis 22, **dadurch gekennzeichnet, dass** die zwei Abstützelemente (14, 14') mit den dazwischen angeordneten wenigstens drei Verbindungseinrichtungen (18) an den einander zugewandten Enden (16, 16') der zwei Fahrzeugelemente (12, 12') integral angebracht sind.

24. Vorrichtung nach einem der Ansprüche 1 bis 22, **dadurch gekennzeichnet, dass** wenigstens ein Abstützelement (14, 14') mit dem zugeordneten Ende (16, 16') des einen der zwei Fahrzeugelemente (12, 12') lösbar verbunden ist.

25. Vorrichtung nach Anspruch 24, **dadurch gekennzeichnet, dass** die zwei Abstützelemente (14, 14') mit den dazwischen angeordneten wenigstens drei Verbindungseinrichtungen (18) mit den einander zugewandten Enden (16, 16') der zwei Fahrzeugelemente (12, 12') lösbar verbunden sind.

26. Vorrichtung nach Anspruch 25, **dadurch gekennzeichnet, dass** die zwei Abstützelemente (14, 14') an den einander zugewandten Enden (16, 16') der zwei Fahrzeugelemente (12, 12') über Reibschluss- und/oder Formschluss-Verbindungen positionsgenau befestigbar sind.

27. Vorrichtung nach Anspruch 26, **dadurch gekennzeichnet, dass** die Formschluss-Verbindungen als Schwalben-Schwanz-, Feder-Nut- oder dergleichen -Verbindungen ausgebildet sind.

28. Vorrichtung nach einem der Ansprüche 25 bis 27, **dadurch gekennzeichnet, dass** die zwei Abstützelemente (14, 14') mit den dazwischen angeordneten wenigstens drei Verbindungseinrichtungen (18) senkrecht von oben oder waagrecht von der Seite an den Enden der zwei Fahrzeugelemente (12, 12') montierbar sind.

29. Vorrichtung nach einem der Ansprüche 26 bis 28, **dadurch gekennzeichnet, dass** die zwei Abstützelemente (14, 14') mit den dazwischen angeordneten wenigstens drei Verbindungseinrichtungen (18) nach Einsetzen in die Formschluss-Verbindung durch Bolzen (54, 54'), Stifte, Schrauben oder Rast-, Schnapp- oder dergleichen -einrichtungen gegen selbsttätiges Lösen gesichert sind.

30. Vorrichtung nach einem der Ansprüche 1 bis 29, **dadurch gekennzeichnet, dass** die Verbindungseinrichtungen (18) mit wenigstens einer Steuereinrichtung zu deren Steuerung bzw. Regelung verbunden sind.

31. Vorrichtung nach Anspruch 30, **dadurch gekennzeichnet, dass** die Verbindungseinrichtungen (18) mit der wenigstens eine Steuereinrichtung jeweils individuell oder sämtlich gemeinsam aufeinander abgestimmt einstellbar sind.

32. Vorrichtung nach Anspruch 30 oder 31, **dadurch gekennzeichnet, dass** die wenigstens eine Steuereinrichtung mit einer Sende-/Empfangseinrichtung zur Steuerung mittels Funk und/oder GPS- bzw. GSM-Standard und/oder Infrarot versehen ist.

33. Verwendung einer Vorrichtung (10) nach einem der vorhergehenden Ansprüche zur lösbaren Verbindung von zwei in Reihe angeordneten Fahrzeugelementen (12, 12') von Gliederfahrzeugen auf dem Lande, zu Wasser, in der Luft und im Weltall.

## Claims

1. Device for the detachable interlinking of two vehicle elements (12, 12') of a vehicle arranged in tandem with two supporting elements (14, 14'} at the ends (16, 16') of the two facing vehicle elements (12, 12') and connecting devices (18) for the transmission of forces between the two vehicle elements (12, 12') being disposed between the two supporting elements (14, 14') with the ends (20, 20') of the connecting devices (18) each being supported via ball joints (22, 22') on the two supporting elements (14, 14') through at least three force transmission points (24, 24') in the same plane and separate from each other, in such a way that between the two supporting elements (14, 14') of the two vehicle elements (12, 12') tractive, pressure and torsional forces can be transmitted, **characterized in that** at least three connecting devices (18) are provided, that can be adjusted in length by an active control system, either altogether or with the exception of a single one.

2. Device in accordance with claim 1, **characterized in that** at least one of the connecting devices (18) comprises a rod-type connecting element (18') that is telescopically lengthwise adjustable, with its ends (20, 20') being supported directly via the ball joints (22, 22') on two supporting elements (14, 14').

3. Device in accordance with one of claims 1 or 2, **characterized in that** at least one of the connecting devices (18) has a rod-type connecting elements (18'') of constant length, with at least one end (20, 20') of the connecting element (18'') being supported via the ball joint (22, 22') on the assigned supporting element (14, 14') with a lengthwise adjusting element (38, 38') arranged between them.

4. Device in accordance with one of claims 1 to 3, **characterized in that** one of the connecting devices (18) comprises a rod-type connecting element of constant length, with its ends being supported via the ball joints (22, 22') directly on the two supporting elements (14, 14').

5. Device in accordance with one of claims 1 to 4, **characterized in that** at least one of the connecting devices (18) is in the lengthwise direction arranged essentially vertically or at an angle (α, β) to the planes covered by at least three force transmission points (24, 24').

6. Device in accordance with claim 5, **characterized in that** at least one of the connecting devices (18), that is arranged at an angle (α, β) to the planes covered by the at least three force transmission points (24, 24'), runs diagonally.

7. Device in accordance with one of claims 1 to 6, **characterized in that** three connecting devices (18) for the transmission of tractive, pressure and torsional forces are arranged between the two supporting elements (14, 14') of the two vehicle elements (12, 12') of the vehicle, designed as a water-borne vehicle.

8. Device in accordance with one of claims 1 to 6, **characterized in that** five connecting devices (18) for the transmission of tractive, pressure and torsional forces are arranged between the two supporting elements (14, 14') of the two vehicle elements (12, 12') of the vehicle designed as a land vehicle, particularly a rail-borne vehicle.

9. Device in accordance with claim 8, **characterized in that** the five connecting devices (18) each have a rod-type connecting element (18') adjustable in length.

10. Device in accordance with claim 8, **characterized in that** the five connecting devices (18) are formed from two length-adjustable, rod-type connecting elements (18') that are arranged diagonally between the two supporting elements (14, 14') and three rod-type connecting elements (18'') of constant length each with a length adjusting element (40, 40').

11. Device in accordance with one of claims 1 to 6, **characterized in that** six connecting devices (18) for the transmission of tractive, pressure and torsional forces are arranged between the two supporting elements (14, 14') of the two vehicle elements (12, 12') of the vehicle designed as an aircraft or missile in space.

12. Device in accordance with one of claims 1 to 11, **characterized in that** a further connecting device (18) is provided for generating a preload between the two supporting elements (14, 14').

13. Device in accordance with one of claims 1 to 6, **characterized in that** twelve connecting devices (18) are arranged between the two supporting elements (14, 14') of the two vehicle elements (12, 12') of the vehicle.

14. Device in accordance with claim 13, **characterized in that** four force transmission points (24, 24') are provided at each supporting element (14, 14') that are arranged on an imaginary circle or at the corners (26, 26') of an imaginary square (28, 28'), right angle or other polygon, to link three ends (20, 20') in each case of three of the twelve connecting devices (18).

15. Device in accordance with claim 14, **characterized in that** the three connecting devices (18), in each case connected between the two supporting elements (14, 14'), are arranged in planes that in each case are vertical to the common plane of the force transmission points (24, 24') and run through the one assigned force transmission point (24, 24').

16. Device in accordance with claim 15, **characterized in that** one (18₁) of the three connecting devices (18) extends on the intersection line (30) of two planes (30₁, 30₂) arranged vertically on each other and the two other (18₂, 18₃) of the three connecting devices (18) extend diagonally in the two planes (30₁, 30₂) arranged vertically on each other.

17. Device in accordance with one of claims 1 to 16, **characterized in that** the force transmission points (24, 24') are located at the two supporting elements (14, 14') essentially in their edge area (32, 32') and the connecting devices (18) run in planes vertical to the supporting elements (14, 14').

18. Device in accordance with claim 17, **characterized in that** a walkway or similar crossing is provided between the two supporting elements (14, 14') and the connecting devices (18) between the two supporting elements (14, 14').

19. Device in accordance with one of claims 1 to 18, **characterized in that** the two supporting elements (14, 14') are connected via an intermediate lengthwise-elastic bellows.

20. Device in accordance with claim 19, **characterized in that** the bellows encloses the connecting devices (18) at least on the outside, in particular also additionally on the inside.

21. Device in accordance with one of claims 1 to 20, **characterized in that** at least one of the connecting devices (18) can be adjusted in length hydraulically, pneumatically, mechanically or electrically.

22. Device in accordance with claim 21, **characterized in that** at least one of the connecting devices (18) includes a hydraulic unit, linear unit, spindle unit or linear motor.

23. Device in accordance with one of claims 1 to 22, **characterized in that** the two supporting elements (14, 14') are integrally mounted at the two facing ends (16, 16') of the two vehicles elements (12, 12'), with the at least three connecting devices (18) arranged in between.

24. Device in accordance with one of claims 1 to 22, **characterized in that** at least one supporting element (14, 14') is detachably linked to the associated end (16, 16') of one of the two vehicles elements (12, 12').

25. Device in accordance with claim 24, **characterized in that** the two supporting elements (14, 14') are detachably connected to the facing ends (16, 16') of the two vehicle elements (12, 12') with the at least three connecting devices (18) arranged in between.

26. Device in accordance with claim 25, **characterized in that** the two supporting elements (14, 14') can be mounted with precise positioning on the two facing ends (16, 16') of the two vehicle elements (12, 12') by means of friction and/or form-interlocking connections.

27. Device in accordance with claim 26, **characterized in that** the form-interlocking connections are formed as swallow tail, key and keyway or similar connections.

28. Device in accordance with one of claims 25 to 27, **characterized in that** the two supporting elements (14, 14') with the at least three connecting devices (18) arranged in between can be mounted vertically from above or horizontally from the side on the ends of the two vehicle elements (12, 12').

29. Device in accordance with one of claims 26 to 28, **characterized in that** the two supporting elements (14, 14') with the at least three connecting devices (18) arranged in between are, after fitting into the form-interlocking connecting, secured against self-loosening by bolts (54, 54'), pins, screws or locking, snap or similar devices.

30. Device in accordance with one of claims 1 to 29, **characterized in that** the connecting devices (18) are connected to at least one control unit for their control.

31. Device in accordance with claim 30, **characterized in that** the connecting devices (18) with the at least one control device can be adjusted to match with each other either individually or in combination.

32. Device in accordance with claim 30 or 31, **characterized in that** the at least one control device is fitted with a transmitting/receiving device for control by means of radio and/or GPS or GSM standard and/or infrared.

33. Use of a device (10) in accordance in with one of the preceding claims for the detachable linking of two vehicle elements (12, 12') arranged in tandem of articulated vehicles on land, water, in the air or in space.

## Revendications

1. Dispositif pour lier de façon mobile deux éléments de véhicule automobile (12, 12') disposés en ligne d'un véhicule automobile avec deux éléments d'appui (14, 14') sur des extrémités (16, 16') orientées l'une vers l'autre des deux éléments du véhicule automobile (12, 12') et deux éléments du véhicule d'appui (14, 14') disposés entre les dispositifs de liaison (18) pour transférer des forces entre les éléments du véhicule automobile (12, 12'); les extrémités (20, 20') des dispositifs de liaison s'appuyant à chaque fois grâce à des rotules (22, 22') sur les éléments d'appui (14, 14') par au moins trois points de transfert de force (24, 24') se trouvant dans un même plan et différents l'un de l'autre, de manière à pouvoir transférer entre les deux éléments d'appui (14, 14') des deux éléments du véhicule automobile (12, 12'), des forces de pression de traction et de torsion, **caractérisé en ce qu'**au moins trois dispositifs de liaison (18) sont prévus qui sont tous ou à l'exception d'un susceptibles d'être déplacés longitudinalement par une commande ou un réglage.

2. Dispositif selon la revendication 1, **caractérisé en ce qu'**au moins un des dispositifs de liaison (18) comprend un élément de liaison (18') en forme de barre, qui est susceptible d'être déplacé longitudinalement; les extrémités (20, 20') desdits dispositif de liaison s'appuyant sur les rotules (22, 22') directement sur les deux éléments d'appui (14, 14').

3. Dispositif selon une des revendications 1 ou 2, **caractérisé en ce qu'**au moins un des dispositifs de liaison (18) comprend un élément de liaison (18') en forme de barre d'une longueur constante; une extrémité (20') au moins de l'élément de liaison (18'') s'appuyant grâce à l'élément de rotule (22, 22') en disposant de façon intermédiaire un élément de réglage longitudinal (38, 38') sur l'élément d'appui (14, 14') associé.

4. Dispositif selon une des revendications 1 à 3, **caractérisé en ce qu'**un des dispositifs de liaison (18) comprend un élément de liaison en forme de barre d'une longueur constante; leurs extrémités s'appuyant grâce aux rotules (22, 22') directement sur les deux éléments d'appui (14, 14').

5. Dispositif selon une des revendications 1 à 4, **caractérisé en ce qu'**u moins un des dispositifs de liaison (18) est disposé en direction longitudinale, essentiellement de façon perpendiculaire ou selon un angle (α, β) vers les plans formés par au moins les trois points de transfert de force (24, 24').

6. Dispositif selon la revendication 5, **caractérisé en ce qu'**au un des dispositifs de liaison (18) s'étend de façon diagonale selon un angle (α, β) vers les plans formés par au moins trois points de transfert de force (24, 24').

7. Dispositif selon une des revendications 1 à 6, **caractérisé en ce que** trois dispositifs de liaison (18) sont disposés pour le transfert des forces de traction, de pression et de torsion entre les deux éléments d'appui (14, 14') des deux éléments du véhicule automobile (12, 12') du véhicule automobile formé en tant que véhicule automobile aquatique .

8. Dispositif selon une des revendications 1 à 6, **caractérisé en ce que** cinq dispositifs de liaison (18) sont disposés pour le transfert des forces de traction, de pression et de torsion entre les deux éléments d'appui (14, 14') des deux éléments d'un véhicule automobile (12, 12') du véhicule automobile formé en tant que véhicule tout terrain, notamment un véhicule automobile à rails.

9. Dispositif selon la revendication 8, **caractérisé en ce que** cinq dispositifs de liaison (18) présente à chaque fois un élément de liaison (18') en forme de barre susceptible d'être déplacé longitudinalement.

10. Dispositif selon la revendication 8, **caractérisé en ce que** cinq dispositifs de liaison (18) sont formés de deux éléments de liaison (14, 14') en forme de barre et susceptibles de se déplacer longitudinalement, lesquels sont disposés de façon diagonale entre les deux éléments d'appui (14, 14'), et formés de trois éléments de liaison (18'') en forme de barre d'une longueur constante avec à chaque fois un élément réglable en longueur (40, 40').

11. Dispositif selon une des revendications 1 à 6, **caractérisé en ce que** six dispositifs de liaison (18) sont disposés pour le transfert des forces de traction, de pression et de torsion entre deux éléments d'appui (14, 14') des deux éléments d'un véhicule automobile (12, 12') du véhicule automobile formé en tant qu'avion ou aéronef dans le cosmos.

12. Dispositif selon une des revendications 1 à 11, **caractérisé en ce qu'**un autre dispositif de liaison (18) est prévu pour la création d'une pré-tension entre les deux éléments d'appui (14, 14').

13. Dispositif selon une des revendications 1 à 6, **caractérisé en ce que** douze dispositifs de liaison (18) sont disposés entre deux éléments d'appui (14, 14') des deux éléments d'un véhicule automobile (12, 12') du véhicule automobile.

14. Dispositif selon la revendication 13, **caractérisé en ce que** sur chaque élément d'appui (14,14') on a prévu quatre points de transfert de force (24, 24'), lesquels sont disposés sur un cercle imaginaire ou aux extrémités (26, 26') d'un carré (28; 28') imaginaire, d'un rectangle imaginaire ou d'autres polygones imaginaires afin d'articuler à chaque fois trois extrémités (20, 20') de trois des douze dispositifs de liaison (18).

15. Dispositif selon la revendication 14, **caractérisé en ce qu'**à chaque fois les dispositifs de liaison (18) sont disposés entre les deux éléments d'appui (14, 14') dans des plans, qui s'étendent à chaque fois de façon perpendiculaire par rapport au plan commun des points de transfert de force (24, 24') et à travers un point de transfert de force associé.

16. Dispositif selon la revendication 15, **caractérisé en ce qu'**un dispositif (18 1) parmi les trois dispositifs de liaison (18) s'étend sur une ligne de coupe (30) de deux plans (301, 302) situés l'un sur l'autre de façon perpendiculaire et **en ce que** les deux autres dispositifs (182, 183) des trois dispositifs de liaison (18) s'étendent de façon diagonale dans les deux plans (301), (302) situés l'un sur l'autre de façon perpendiculaire.

17. Dispositif selon une des revendications 1 à 16, **caractérisé en ce que** les points de transfert de force (24, 24') se trouvent sur les deux éléments d'appui (14, 14') essentiellement sur leur zone du côté du bord (32, 32') et **en ce que** les dispositifs de liaison (18) s'étendent vers les plans situés de façon perpendiculaire par rapport aux éléments d'appui (14, 14').

18. Dispositif selon la revendication 12, **caractérisé en ce qu'**entre les deux éléments d'appui (14, 14') et les dispositifs de liaison (18) on a prévu une traverse accessible ou un moyen de transfert similaire entre les deux éléments d'appui (14, 14').

19. Dispositif selon une des revendications 1 à 18, **caractérisé en ce que** les deux éléments d'appui (14, 14') sont reliés par un soufflet élastique longitudinalement disposé entre eux .

20. Dispositif selon la revendication 19, **caractérisé en ce que** le soufflet comprend les dispositifs de liaison (18), au moins à l'extérieur, notamment en plus à l'intérieur.

21. Dispositif selon une des revendications 1 à 20, **caractérisé en ce qu'**au moins un des dispositifs de liaison (18) est susceptible d'être déplacé de façon hydraulique, pneumatique, mécanique ou électrique en longueur.

22. Dispositif selon la revendication 21, **caractérisé en ce qu'**au moins un des dispositifs de liaison (18) comprend une unité hydraulique, une unité linéaire, une unité de broche ou un moteur linéaire.

23. Dispositif selon une des revendications 1 à 22, **caractérisé en ce que** les deux éléments d'appui (14, 14') sont fixés avec les trois dispositifs de liaison (18) au moins, disposés entre lesdits éléments d'appui, sur les extrémités orientées l'une vers l'autre (16, 16') des deux éléments d'un véhicule automobile (12, 12') de façon solidaire.

24. Dispositif selon une des revendications 1 à 22, **caractérisé en ce qu'**au moins un élément d'appui (14, 14') peut être relié de façon mobile avec l'extrémité associée (16, 16') d'un ou des deux éléments d'un véhicule automobile (12, 12').

25. Dispositif selon la revendication 24, **caractérisé en ce que** les deux éléments d'appui (14, 14') sont reliés de façon mobile avec les trois dispositifs de liaison (18) au moins, disposés entre lesdits éléments d'appui, avec les deux extrémités (16, 16') orientées l'une vers l'autre des deux éléments d'un véhicule automobile (12, 12').

26. Dispositif selon la revendication 25, **caractérisé en ce que** les deux éléments d'appui (14, 14') sont susceptibles d'être fixés sur les extrémités (16, 16') orientées l'une vers l'autre des deux éléments d'un véhicule automobile (12, 12') par des liaisons à frottement et/ou une liaison à concordance de forme selon une position précise.

27. Dispositif selon la revendication 26, **caractérisé en ce que** les liaisons à concordance de forme sont formées en tant que liaisons en que d'aronde, liaisons à ressort, liaison à rainure ou quelque chose de similaire.

28. Dispositif selon une des revendications 25 à 27, **caractérisé en ce que** les deux éléments d'appui (14, 14') sont susceptibles d'être montés avec les trois dispositifs de liaison (18) au moins disposés entre lesdits éléments d'appui, de façon perpendiculaire du dessus ou horizontalement à partir du côté, sur les extrémités des deux éléments d'un véhicule automobile (12, 12').

29. Dispositif selon une des revendications 26 à 28, **caractérisé en ce que** les deux éléments d'appui (14, 14') sont sécurisés contre un détachement automatique, avec les trois dispositifs de liaison (18) au moins disposés entre lesdits éléments d'appui après l'introduction dans la liaison à concordance de forme à l'aide de boulons (54, 54'), de tiges, vis ou de dispositifs d'encliquetage, d'enclenchement ou quelque chose de similaire.

30. Dispositif selon une des revendications 1 à 29, **caractérisé en ce que** les dispositifs de liaison (18) sont reliés avec au moins un dispositif de commande pour être commandés, respectivement réglés.

31. Dispositif selon la revendication 30, **caractérisé en ce que** les dispositifs de liaison (18) sont susceptibles d'être réglés de façon individuelle ou tous les dispositifs peuvent être réglés ensemble de façon ajustée les uns par rapport aux autres avec au moins un dispositif de commande .

32. Dispositif selon la revendication 30 ou 31, **caractérisé en ce qu'**au moins un dispositif de commande est pourvu d'un dispositif d'émission/réception destiné à commander au moyen de la radiocommunication et/ou d'un standard GPS, respectivement d'un standard GSM et/ou de l'infrarouge.

33. Utilisation d'un dispositif (10) selon une des revendications précédentes pour effectuer la liaison mobile de deux éléments d'un véhicule automobile (12, 12') disposés en ligne, de véhicules automobiles articulés à la campagne, sur l'eau, dans l'air et dans le cosmos.
